# EUROPEAN PATENT APPLICATION

(11) **EP 4 175 207 A1**
(43) Date of publication of application: **03.05.2023**
(21) Application number: 21833483.7
(22) Date of filing: 18.06.2021

(54) **METHOD, APPARATUS AND DEVICE FOR SUPPORTING TCP DYNAMIC MIGRATION, AND STORAGE MEDIUM**

(30) Priority: 28.06.2020 CN 202010599738
(71) Applicant: ZTE Corporation, Shenzhen, Guangdong 518057 (CN)
(72) Inventor: YUAN, Song, Shenzhen, Guangdong 518057 (CN)
(74) Representative: Osterhoff, Utz
(86) International application number: PCT/CN2021/100995
(87) International publication number: WO 2022/001705

(57) **Abstract**

Disclosed are a method, an apparatus and a device for supporting dynamic migration of transmission control protocol (TCP), and a storage medium, which belong to the technical field of core network communications. The method includes: triggering to download an internet protocol security (IPSec) secure association (SA) from a database during a user terminal being migrated from a virtual machine of an original TCP connection to another virtual machine; and restoring and creating a TCP connection by using the IPSec SA downloaded from the database, to achieve a seamless connection of user data.

## Description

### CROSS-REFERENCE TO RELATED APPLICATIONS

This application claims priority to Chinese Patent Application No. 202010599738.X, filed on June 28, 2020, the entire contents of which are incorporated herein by reference.

### TECHNICAL FIELD

The present application relates to the technical field of the core network communication, and in particular to a method, an apparatus and a device for supporting dynamic migration of TCP, and a storage medium.

### BACKGROUND

Transmission control protocol (TCP) is a reliable transport layer protocol that guarantees the reliability and integrity of connected data, but does not inherently support migration between devices, which has little impact on terminal-type devices, but can be a significant inconvenience for the server which requires a high level of reliability, because if the maintenance is required or the failure occurs, or dynamic shrinking and expansion need to be performed in a virtualized environment, all established TCP connections between the clients will be invalidation.

### SUMMARY

Embodiments of the present application provide a method for supporting dynamic migration of transmission control protocol (TCP), including:
triggering to download an internet protocol security (IPSec) secure association (SA) from a database during a user terminal being migrated from a virtual machine of an original TCP connection to another virtual machine; and
restoring and creating a TCP connection by using the IPSec SA downloaded from the database, to achieve a seamless connection of user data.

Embodiments of the present application provide an apparatus for supporting dynamic migration of transmission control protocol (TCP), including:
a download module for triggering to download an internet protocol security (IPSec) secure association (SA) from a database during a user terminal being migrated from a virtual machine of an original TCP connection to another virtual machine; and
a recovery connection module for restoring and creating a TCP connection by using the IPSec SA downloaded from the database, to achieve a seamless connection of user data.

Embodiments of the present application provide a storage medium for computer readable storage, characterized in that the storage medium stores one or more programs, the one or more programs are executable by one or more processors to implement the operations of the aforementioned method.

### BRIEF DESCRIPTION OF THE DRAWINGS

FIG. 1 is a flowchart of a method for a high-capacity device supporting dynamic migration of TCP according to a first embodiment of the present application.
FIG. 2 is a schematic diagram of an apparatus for a high-capacity device supporting dynamic migration of TCP according to a second embodiment of the present application.
FIG. 3 is a schematic diagram of roles and interrelationships of various modules in an architecture according to an embodiment of the present application.
FIG. 4 is a schematic diagram of the dynamic migration of TCP users when virtualization shrink occurs according to an embodiment of the present application.
FIG. 5 is a schematic diagram of the TCP recovery process of service data initiated first by the user terminal after the shrink occurs according to an embodiment of the present application.
FIG. 6 is a schematic diagram of dynamic migration of TCP users when virtualization expansion occurs according to an embodiment of the present application.
FIG. 7 is a schematic diagram of the TCP recovery process of service data initiated first by the core network side after the expansion occurs according to an embodiment of the present application.

### DETAILED DESCRIPTION OF THE EMBODIMENTS

It should be understood that the specific embodiments described herein are intended to only explain the present application and are not intended to limit the present application.

In the subsequent description, suffixes such as "module", "part" or "unit" are used to denote components only for the purpose of facilitating the description of the present application and have no specific meaning of their own. Thus, the terms "module", "part" or "unit" may be mixed for use.

The inventors find that there are already some solutions that allow TCP to achieve "hot primary backup" in some scenarios. However, these solutions still have the following major shortcomings for high-capacity devices.
1) The amount of data to be synchronized is large. The main principle of some solutions relies on synchronizing data of the original TCP connection between the primary and backup devices, which is difficult to accept for servers with a large number of TCP connections, especially for core network devices.
2) Some solutions with small data to be synchronized do not fully solve the problem of "TCP connection data may be initiated from two different directions".
(3) Most of the current solutions are limited to "primary and backup" devices, but with the development of cloud technology, more flexible backup and migration mechanisms need to be considered.
(4) Even in the scenario of two devices, primary and backup devices, most of the existing solutions are difficult to solve the problem of continuous multiple reversals within short time, that is, once there is an abnormal and frequent jitter of role switching between the primary and backup devices (or similar scenarios for other special reasons), the robustness and effectiveness of the solution will face a severe test.

Based on this, the main purpose of the present application aims to propose a method, an apparatus, a device and a storage medium for the high-capacity device supporting dynamic migration of PCT, which requires a small amount of synchronized data, significantly reduces the conventional overhead, and combines with an appropriate smoothing mechanism to avoid the problem of rapid load rush in short time, and also can migrate TCP connections from the original multiple devices to one or more other devices.

### First embodiment

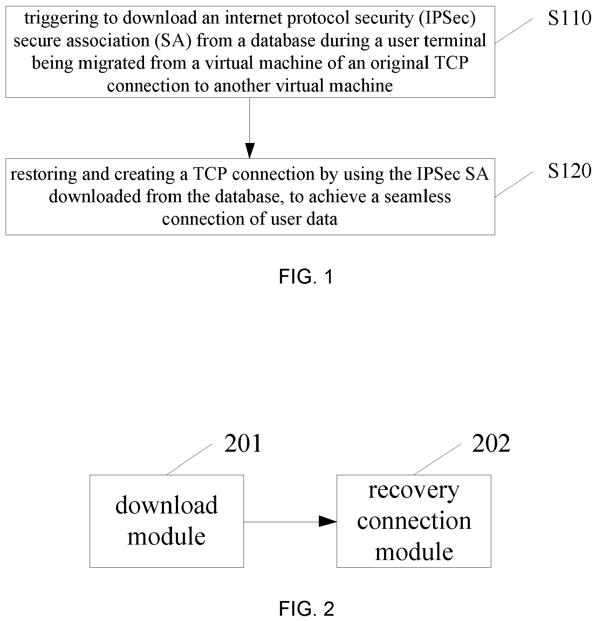

As shown in FIG. 1, the embodiment provides a method for a high-capacity device supporting dynamic migration of TCP, the method includes:
operation S110: triggering to download an internet protocol security (IPSec) secure association (SA) from a database during a user terminal being migrated from a virtual machine of an original TCP connection to another virtual machine.

In an embodiment, when the user terminal registers with the core network device, the TCP connection belonging to the user terminal is established on one of the virtual machines of the core network. At this time, the address + port quaternion (a source IP address, a destination IP address, a source port, a destination port) corresponding to the TCP connection to which the user terminal belongs is stored in the database. The user terminal can start service communication (initiating and closing calls, setting options, etc.) via this TCP connection. During the user terminal being migrated from the virtual machine of the original TCP connection to another virtual machine, the other virtual machines download the IPSec SA from the database to obtain the address + port quaternion (the source IP address, the destination IP address, the source port, the destination port) corresponding to the original TCP connection of the user terminal. The source IP address and the source port can be the parameter information of the user terminal; the destination IP address and destination port can be the parameter information of the virtual machine of the original TCP connection of the user terminal. The meaning of the downloading IPSec SA from the database includes, but is not limited to, the above description. In addition to the quaternion information, the operation includes after the TCP connection is restored, information required for the TCP layer of the local terminal to communicate correctly with the IPSec layer of the local terminal, and for the IPSec layer of the local terminal to continue to communicate correctly with the IPSec layer at the opposite terminal.

Operation S120: restoring and creating a TCP connection by using the IPSec SA downloaded from the database, to achieve a seamless connection of user data.

In an embodiment, the other virtual machines use the IPSec SA downloaded from the database, i.e., the source IP address and source port of the user terminal are known from the address+port quaternion (the source IP address, the destination IP address, the source port, the destination port) corresponding to the original TCP connection stored in the database by the user terminal. In an embodiment, restoring and creating a TCP connection means that the other virtual machines create a TCP connection with the user terminal. In an embodiment, the other virtual machines take over the user terminal and create a TCP connection with the user terminal by using the source IP address and the source port, etc. of the user terminal. The creation process does not require a "three handshake" process as defined by the TCP specification and can be triggered by either the user terminal or the local device. In an embodiment, the triggering to download an IPSec SA from a database during a user terminal being migrated from a virtual machine of an original TCP connection to another virtual machine includes: detecting a load state of each virtual machine within a core network device to determine whether to shrink the virtual machine; in response to shrinking the virtual machine, a user terminal whose TCP connection is in the shrunk virtual machine sending a migration request to the core network device; and the core network device distributing, according to the migration request, TCP message of the user terminal to a non-shrunk virtual machine, and triggering the non-shrunk virtual machine to download the IPSec SA from the database.

In an embodiment, the non-shrunk virtual machine downloading the IPSec SA from the database refers to that the non-shrunk virtual machine obtains the address+port quaternion (the source IP address, the destination IP address, the source port, the destination port) corresponding to the original TCP connection stored in the database by the user terminal of the non-shrunk virtual machine. The non-shrunk virtual machine obtains the source IP address and the source port of the user terminal from the quaternion. Similarly, the PCT message of the user terminal assigned to the non-shrunk virtual machine at least includes a source IP address and source port information of the user terminal. The non-shrunk virtual machine restores and creates the TCP connection by using the IPSec SA downloaded from the database and received TCP message. In an embodiment, restoring and creating a TCP connection refers to that the non-shrunk virtual machine creates a TCP connection with the user terminal based on the source IP address and source port of the user terminal by learning the TCP SEQ/ACK numbers of both parties in the TCP message, the TCP window of the other party, and other parameters. The non-shrunk virtual machine takes over the user terminal and its TCP connection of the shrunk virtual machine. The entire communication continues seamlessly and is triggered on demand, without the need for centralized synchronization. The user side is completely unaware and the seamless connection is achieved.

The restoring and creating a TCP connection by using the IPSec SA downloaded from the database, to achieve a seamless connection of user data includes: the non-shrunk virtual machine verifying the IPSec SA after downloading the IPSec SA from the database; and the non-shrunk virtual machine restoring and creating the TCP connection by using the IPSec SA after the IPSec SA is verified, to achieve the seamless connection of the user data.

In an embodiment, the triggering to download an IPSec SA from the database during the user terminal being migrated from the virtual machine of the original TCP connection to another virtual machine includes: detecting a load state of each virtual machine within a core network device to determine whether to expand the virtual machine; in response to expanding the virtual machine, the core network device initiating an online detection to a user terminal assigned to a new virtual machine for creating the TCP connection for the user terminal; and the core network device triggering the new virtual machine to download the IPSec SA from the database after creating the TCP connection for the user terminal.

In an embodiment, for the user terminal assigned to the new virtual machine, a data area and the TCP connection on the original virtual machine are released in batches by an application programming interface (API). The core network device initiates an online detection to the user terminal assigned to the new virtual machine, and if it finds that there is no TCP connection available for the user terminal at this time, it calls the API to actively create a TCP connection. After creating the TCP connection for the user terminal, the core network device triggers the new virtual machine to download the IPSec SA from the database, thus to restore and create the TCP connection. The new virtual machine successfully takes over the user terminal and its TCP connection that previously belonged to the old virtual machine, and the entire communication can continue.

The present application also includes: saving the IPSec SA to the database when the user terminal registers with the core network device. In an embodiment, when the user terminal registers with the core network device, the TCP connection belonging to the user terminal is established on one of the virtual machines of the core network. At this time, the IPSec SA, i.e. the address+port quaternion (the source IP address, the destination IP address, the source port, the destination port) corresponding to the TCP connection to which the user terminal belongs, is saved in the database.

### Second embodiment

FIG. 2 is a schematic diagram of an apparatus for a high-capacity device supporting dynamic migration of TCP according to the second embodiment of the present application, as shown in FIG. 2, including: a download module 201 and a recovery connection module 202.

It should be understood by those skilled in the art that all or some of the functional modules/units in the methods, systems, and devices disclosed above may be implemented as a software (which may be implemented by the computer program code executable by a computing device), a firmware, a hardware, and appropriate combinations thereof. In hardware implementations, the division between functional modules/units mentioned in the above description does not necessarily correspond to a division of physical components; for example, a physical component may have multiple functions, or a function or step may be performed cooperatively by several physical components. Some or all of the physical components may be implemented as a software executed by a processor, such as a central processing unit, a digital signal processor, or a microprocessor, or as hardware, or as an integrated circuit, such as a specialized integrated circuit.

In some embodiments, the above processing apparatus includes a storage logic non-transitory machine-readable storage medium that can be used to perform at least some of functions of, for example, a storage module, an obtaining module, a trigger module and a deleting module, etc. The logic may include instructions, data, and/or codes, if these instructions, data, and/or codes are executed by the machine, the machine can perform the method, the process and/or operations mentioned herein. The machine may include for example, any appropriate processing platform, computing platform, computing device, processing device, computing system, processing system, computer, processor, etc., and any appropriate combination of a hardware, a software, and a firmware etc. can be used to implement. The logic may include or be implemented as: software, software module, application, program, sub-program, instruction, instruction set, computing code, word, value, symbol, etc. These instructions can include any appropriate codes, for example, source code, compiled code, decoded code, executable code, static code, dynamic code, etc. These instructions may be implemented according to a preset computer language, manner, or grammar to direct the processor to perform a function. These instructions can be implemented in any suitable high-level, low-level, object-oriented, visual, compiled and/or decoded programming language, e.g., C, C++, Java, BASIC, Matlab, Pascal, Visual BASIC, assembly language, machine code, etc.

In an embodiment, the download module 201 for triggering to download an IPSec SA from a database during a user terminal being migrated from a virtual machine of an original TCP connection to another virtual machine; the recovery connection module 202 for restoring and creating a TCP connection by using the IPSec SA downloaded from the database, to achieve a seamless connection of user data.

In an embodiment, when the user terminal registers with the core network device, the TCP connection belonging to the user terminal is established on one of the virtual machines of the core network. At this time, the address + port quaternion (the source IP address, the destination IP address, the source port, the destination port) corresponding to the TCP connection to which the user terminal belongs is stored in the database. The user terminal can start service communication (initiating and closing calls, setting options, etc.) via this TCP connection. During the user terminal being migrated from the virtual machine of the original TCP connection to another virtual machine, the other virtual machines download the IPSec SA from the database to obtain the address + port quaternion (the source IP address, the destination IP address, the source port, the destination port) corresponding to the original TCP connection of the user terminal. The source IP address and the source port can be the parameter information of the user terminal. The destination IP address and destination port can be the parameter information of the virtual machine of the original TCP connection of the user terminal. In an embodiment, the other virtual machines use the IPSec SA downloaded from the database, i.e., obtain the source IP address and source port, etc., of the user terminal from the address+port quaternion (the source IP address, the destination IP address, the source port, the destination port) corresponding to the original TCP connection stored in the database by the user terminal. In an embodiment, the restoring and creating a TCP connection means that the other virtual machines create a TCP connection with the user terminal. In an embodiment, the other virtual machines use the source IP address and source port, etc. of the user terminal to take over the user terminal and create a TCP connection with the user terminal.

The download module 201 includes: a first download unit and a second download unit.

The first download unit is for detecting a load state of each virtual machine within a core network device to determine whether to shrink the virtual machine; in response to shrinking the virtual machine, a user terminal whose TCP connection is in the shrunk virtual machine sending a migration request to the core network device; and the core network device distributing, according to the migration request, TCP message of the user terminal to a non-shrunk virtual machine, and triggering the non-shrunk virtual machine to download the IPSec SA from the database.

In an embodiment, the non-shrunk virtual machine downloading the IPSec SA from the database refers to that the non-shrunk virtual machine obtains the address+port quaternion (the source IP address, the destination IP address, the source port, the destination port) corresponding to the original TCP connection stored in the database by the user terminal of the non-shrunk virtual machine. The non-shrunk virtual machine obtains the source IP address and the source port of the user terminal from the quaternion. Similarly, the PCT message of the user terminal assigned to the non-shrunk virtual machine at least includes a source IP address and source port information of the user terminal. The non-shrunk virtual machine restores and creates the TCP connection by using the IPSec SA downloaded from the database and received TCP message. In an embodiment, restoring and creating a TCP connection refers to that the non-shrunk virtual machine creates a TCP connection with the user terminal according to the source IP address and source port of the user terminal by learning the TCP SEQ/ACK numbers of both parties in the TCP message, the TCP window of the other party, and other parameters. The non-shrunk virtual machine takes over the user terminal and its TCP connection of the shrunk virtual machine. The entire communication continues seamlessly and is triggered on demand, without the need for centralized synchronization. The user side is completely unaware and the seamless connection is achieved.

In an embodiment, the recovery connection module 202 is for the non-shrunk virtual machine verifying the IPSec SA after downloading the IPSec SA from the database; and the non-shrunk virtual machine restoring and creating the TCP connection by using the IPSec SA after the IPSec SA is verified, to achieve the seamless connection of the user data.

The second download unit is for detecting a load state of each virtual machine within a core network device to determine whether to expand the virtual machine; in response to expanding the virtual machine, the core network device initiating an online detection to a user terminal assigned to a new virtual machine for creating the TCP connection for the user terminal; and the core network device triggering the new virtual machine to download the IPSec SA from the database after creating the TCP connection for the user terminal. In an embodiment, for the user terminal assigned to the new virtual machine, a data area and the TCP connection on the original old virtual machine are released in batches by an API. The core network device initiates an online detection to the user terminal assigned to the new virtual machine, and if it finds that there is no TCP connection available for the user terminal at this time, it calls the API to actively create a TCP connection. After creating the TCP connection for the user terminal, the core network device triggers the new virtual machine to download the IPSec SA from the database, thus to restore and create the TCP connection. The new virtual machine successfully takes over the user terminal and its TCP connection that previously belonged to the old virtual machine, and the entire communication can continue.

The third embodiment of the present application proposes an apparatus for high-capacity devices supporting dynamic migration of TCP, including a memory, a processor, a program stored on the memory and runnable on the processor, and a data bus for implementing communication between the processor and the memory, wherein the program when executed by the processor implements the method of the first embodiment.

The four embodiment of the present application proposes a computer readable storage medium, the storage medium stores one or more programs, the one or more programs are executable by one or more processors to implement the method of the first embodiment.

Embodiments of the present application have no to-be-synchronized data of TCP connection during system operation. After migration, as long as the opposite terminal is still valid, when the local terminal needs to send data first, and can complete the active recovery of the connection through a unique detection mechanism and send the data out effectively, without relying on having to passively receive the data from the opposite party first. After migration, the original device where the TCP connection is located is able to quickly empty itself of all migrated TCP resources without sending any messages to the outside and without rebooting.

### Fifth embodiment

The embodiment is used to demonstrate the migration of TCP users from the original virtual machine to other virtual machines, triggered by the terminal, after a shrink occurs.

51) The legitimate user initiates a registration request to the core network device.

52) When the registration is completed, the TCP connection belonging to the user is established on one of the core network virtual machine devices. The device then synchronizes the user's corresponding address+port quaternion to the database, and then the user can start relevant service communication (initiating and closing calls, setting options, etc.) via this TCP connection.

Later, no further data synchronization operations are performed on this TCP connection to ensure that the amount of synchronized data is as small as possible.

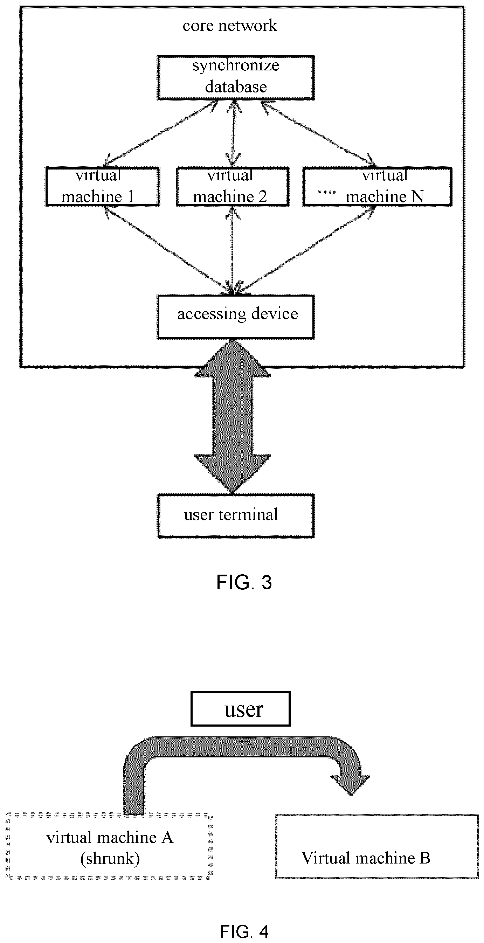

53) After all users finish registering and the system is stabilized, the administrator finds that the load on each virtual machine is well below the expected level and decides to scale down some of the virtual machines for other uses. The process is described in FIG. 4. Note that at the moment of migration, no synchronization operation occurs, but the synchronization operation is subsequently triggered on demand.

54) A user, whose TCP connection is in the shrunk virtual machine A, initiates a call request and the message is distributed to another non-shrunk virtual machine B. Since the virtual machine B cannot find the user's corresponding quaternion, a database obtaining operation is triggered to synchronize the user's corresponding quaternion to this virtual machine.

55) After successful synchronization, the TCP layer directly uses the message to immediately restore and create a TCP connection, mainly by learning the TCP SEQ/ACK sequence numbers of both parties, the TCP window of the other party, and other parameters. Note that here the TCP layer can directly trust this message, because the data that can be synchronized beforeis a trustworthy connection that has been established.

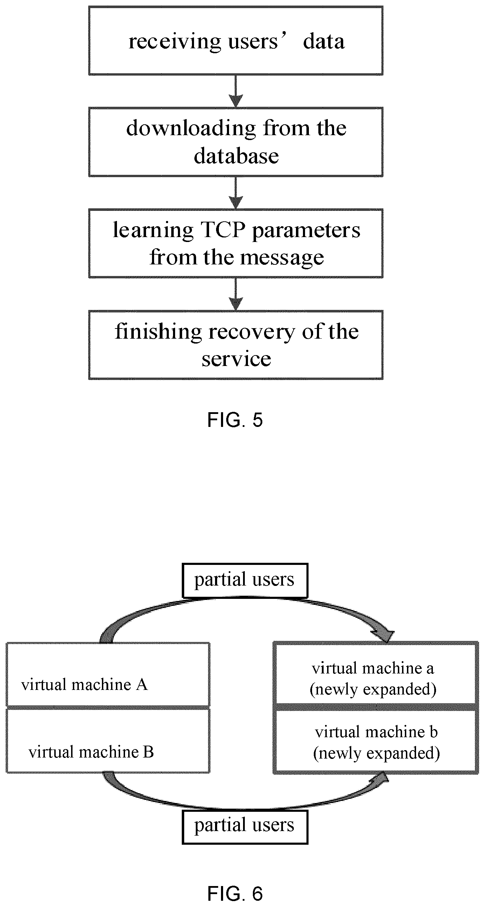

The virtual machine B successfully takes over the users and their TCP connections that previously belonged to virtual machine A. The entire communication continues seamlessly and is triggered on demand, without the need for centralized synchronization. The user terminal is completely unaware and seamless. The flowchart of the operation can be seen FIG. 5.

### Sixth embodiment

The embodiment is used to demonstrate the process of migration of TCP users from the original virtual machine to the new virtual machine, triggered by the core network side after an expansion occurs.

61) The legitimate user initiates a registration request to the core network device.

62) When the registration is completed, the TCP connection belonging to the user is established on one of the core network virtual machine devices. The device synchronizes the TCP information to the system database at this time. The location of the system database module in the architecture of the present application can also be found in FIG. 3.

(63) After all users finish registering and the system is stabilized, the administrator begins to find that the initial underestimation of the load and all virtual machines begin to show a significant trend of overload, so it is decided to eject some of the new virtual machines to reduce the load on each of the currently existing virtual machines. The users that previously belonged to each of the old virtual machines A, B,......, etc. are partially pulled out and transferred to the newly ejected virtual machines a, b, ......... The process is shown in FIG. 6.

64) For the users assigned to the new virtual machine, the relevant data areas and TCP connections on the old virtual machine are released in batches (without any interaction with the outside) through the "silent release API" of the present application to reduce the system load.

(65) A user assigned to the new virtual machine a is initiated an online detection by the core network, and the new virtual machine a finds that there is no corresponding TCP connection available for the user at this time, so it invokes the application programming interface (API) provided by the present application to actively restore a TCP connection. Note that this process differs from the typical new link creation process by not sending (and not being able to send) synchronize sequence numbers (SYN) link-building message, since the other party's connection is still in place. Instead, some sort of probing mechanism is started, and a retransmission timer is started.

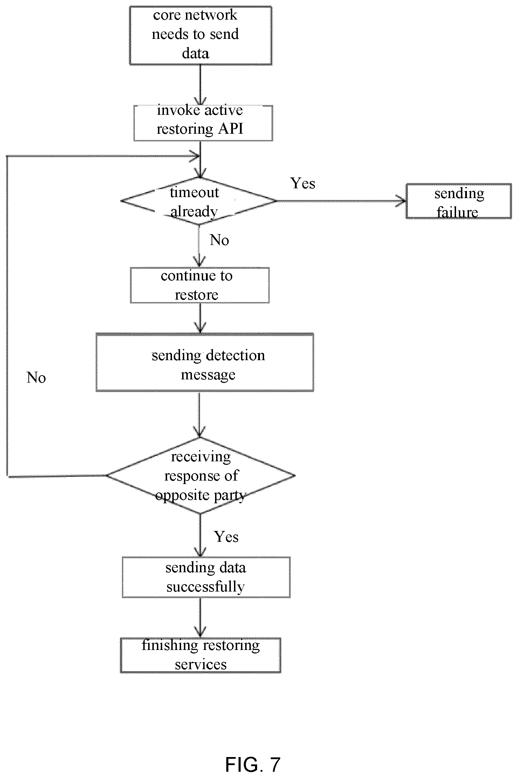

(66) Once the probe is successful, the received probe response can be used to restore the various parameters on the connection while completing the sending of the message. The new virtual machine a successfully takes over the users and their TCP connections that previously belonged to the old virtual machine A, and the entire communication can continue. The flowchart of the operation is shown in FIG. 7.

The embodiment of the present application is suitable for high-capacity TCP devices with high requirements for security and reliability, especially when the user terminal accesses the server or core network through TCP connection, the success rate of the service connection can be significantly improved after the failure of the original device where the TCP connection is located (whether it is a primary /backup switch, popup and shrink or other reasons).

The method, an apparatus, a device and a storage medium for the higher-capacity device supporting the dynamic migration of TCP proposed in the embodiment of the present application, which requires synchronization of only a small amount of connection-critical data for the migrated TCP connection, and can combine with unique security techniques to ensure the security of the migrated TCP connection, and extends the standard BSD (and other similar styles) socket API to allow the owner of the original TCP connection to migrate the connection in a more flexible and less costly manner. The migration of the PCT connection is performed in a "triggered on demand" manner.

The embodiment of the present application has the following advantages: 1) requiring very little data to be synchronized, the regular operation overhead of the system is reduced significantly. 2) "triggered on demand" effectively avoids the uncertainty of most synchronization schemes in the "primary-backup role jitter" scenario, and also serves to further smooth out the system load. 3) The "actively restoring TCP" socket API is expanded. This API can effectively solve the need for the upper layer of the local terminal to send data before receiving data from the opposite terminal after a TCP connection migration. 4) The "silent release TCP" socket API is expanded. The traditional TCP resource releasing API often requires sending FIN or RST messages, which increases the overhead on the local terminal and causes the connection to be closed on the opposite terminal at the same time. The new API of the present application can realize the silent release of TCP resources without any external action, which not only makes the opposite terminal completely unaware of the migration, but also further saves the overhead of sending and receiving messages. 5) The present application is not limited to the traditional "a primary and a backup" method, but can realize "multiple primary to multiple backup". (6) The present application is proven to be very scalable as it can be used in combination with security protocols such as IPsec (i.e., supports but is not dependent on and limited to it).

It is understood by those skilled in the art that all or some of the steps, systems, and functional modules/units in the methods disclosed above may be implemented as a software, a firmware, a hardware, and appropriate combinations thereof.

In a hardware implementation, the division between functional modules/units referred to in the above description does not necessarily correspond to a division of physical components; for example, a physical component may have multiple functions, or a function or step may be performed cooperatively by several physical components. Some or all of the physical components may be implemented as software executed by a processor, such as a central processing unit, a digital signal processor, or a microprocessor, or a hardware, or an integrated circuit, such as a specialized integrated circuit. Such software may be distributed on a computer-readable medium, which may include computer storage media (or non-transitory media) and communication media (or transitory media). As is well known to those skilled in the art, the term "computer storage medium" includes volatile and non-volatile, removable and non-removable media implemented in any method or technology for storing information, such as computer readable instructions, data structures, program modules, or other data. The computer storage medium includes, but are not limited to, a RAM, a ROM, a EEPROM, a flash memory or other memory technology, a CD-ROM, a digital versatile disk (DVD) or other optical disk storage, magnetic cartridges, magnetic tapes, disk storage or other magnetic storage devices, or any other medium that can be used to store desired information and can be accessed by a computer. In addition, it is well known to those skilled in the art that communication media typically contains computer readable instructions, data structures, program modules, or other data in modulated data signals such as carrier waves or other transmission mechanisms, and may include any information delivery medium.

The foregoing illustrates embodiments of the present application with reference to the accompanying drawings and is not thereby limiting the scope of the present application. Any modifications, equivalent substitutions and improvements made by those skilled in the art without departing from the scope of the present application shall be within the scope of the present application.

## Claims

1. A method for supporting dynamic migration of transmission control protocol (TCP), **characterized by** comprising:
triggering to download an internet protocol security (IPSec) secure association (SA) from a database during a user terminal being migrated from a virtual machine of an original TCP connection to another virtual machine; and
restoring and creating a TCP connection by using the IPSec SA downloaded from the database, to achieve a seamless connection of user data.

2. The method according to claim 1, wherein the triggering to download the IPSec SA from the database during the user terminal being migrated from the virtual machine of the original TCP connection to another virtual machine comprises:
detecting a load state of each virtual machine within a core network device to determine whether to shrink the virtual machine;
in response to shrinking the virtual machine, a user terminal whose TCP connection is in a shrunk virtual machine sending a migration request to the core network device; and
the core network device distributing, according to the migration request, TCP message of the user terminal to a non-shrunk virtual machine, and triggering the non-shrunk virtual machine to download the IPSec SA from the database.

3. The method according to claim 2, wherein the restoring and creating the TCP connection by using the IPSec SA downloaded from the database, to achieve the seamless connection of the user data comprises:
the non-shrunk virtual machine verifying the IPSec SA after downloading the IPSec SA from the database; and
the non-shrunk virtual machine restoring and creating the TCP connection by using the IPSec SA after the IPSec SA is verified, to achieve the seamless connection of the user data.

4. The method according to claim 1, wherein the triggering to download the IPSec SA from the database during the user terminal being migrated from the virtual machine of the original TCP connection to another virtual machine comprises:
detecting a load state of each virtual machine within a core network device to determine whether to expand the virtual machine;
in response to expanding the virtual machine, the core network device initiating an online detection to a user terminal assigned to a new virtual machine for creating the TCP connection for the user terminal; and
the core network device triggering the new virtual machine to download the IPSec SA from the database after creating the TCP connection for the user terminal.

5. The method according to claim 4, wherein for the user terminal assigned to the new virtual machine, a data area and the TCP connection on an old original virtual machine are released in batches by an application programming interface (API).

6. The method according to any one of claims 1 to 5, further comprising:
saving the IPSec SA to the database when the user terminal registers with the core network device.

7. The method according to any one of claims 1 to 6, wherein the downloading the IPSec SA from the database means that the other virtual machines obtain from the database a source IP address, a destination IP address, a source port and destination port information that correspond to the TCP connection to which the user terminal belongs.

8. The method according to any one of claims 1 to 7, wherein the restoring and creating the TCP connection means that the other virtual machines create the TCP connection with the user terminal.

9. The method according to claim 2 or 3, wherein the non-shrunk virtual machine restores and creates the TCP connection by using the IPSec SA downloaded from the database and received TCP message; and the downloaded IPSec SA and the received TCP message at least comprise a source IP address and source port information of the user terminal, respectively.

10. An apparatus for supporting dynamic migration of transmission control protocol (TCP), **characterized by** comprising:
a download module for triggering to download an internet protocol security (IPSec) secure association (SA) from a database during a user terminal being migrated from a virtual machine of an original TCP connection to another virtual machine; and
a recovery connection module for restoring and creating a TCP connection by using the IPSec SA downloaded from the database, to achieve a seamless connection of user data.

11. The apparatus according to claim 10, wherein the download module comprises:
a first download unit for detecting a load state of each virtual machine within a core network device to determine whether to shrink the virtual machine; in response to shrinking the virtual machine, a user terminal whose TCP connection is in a shrunk virtual machine sending a migration request to the core network device; and the core network device distributing, according to the migration request, TCP message of the user terminal to a non-shrunk virtual machine, and triggering the non-shrunk virtual machine to download the IPSec SA from the database.

12. The apparatus according to claim 10, wherein the download module comprises:
a second download unit for detecting a load state of each virtual machine within a core network device to determine whether to expand the virtual machine; in response to expanding the virtual machine, the core network device initiating an online detection to a user terminal assigned to a new virtual machine for creating the TCP connection for the user terminal; and the core network device triggering the new virtual machine to download the IPSec SA from the database after creating the TCP connection for the user terminal.

13. The method according to any one of claims 10 to 12, wherein the downloading the IPSec SA from the database means that the other virtual machines obtain from the database a source IP address, a destination IP address, a source port and destination port information that correspond to the TCP connection to which the user terminal belongs.

14. The method according to any one of claims 10 to 12, wherein the restoring and creating the TCP connection means that the other virtual machines create the TCP connection with the user terminal.

15. The method according to any one of claims 10 to 12, wherein the non-shrunk virtual machine restores and creates the TCP connection by using the IPSec SA downloaded from the database and received TCP message; and the downloaded IPSec SA and the received TCP message at least comprise a source IP address and source port information of the user terminal, respectively.

16. A device for supporting dynamic migration of transmission control protocol (TCP), **characterized by** comprising: a memory, a processor, a program stored on the memory and runnable on the processor, and a data bus for implementing communication between the processor and the memory, wherein the program when executed by the processor implements the operations of the method according to any one of claims 1 to 9.

17. A storage medium for computer readable storage, **characterized in that** the storage medium stores one or more programs, the one or more programs are executable by one or more processors to implement the operations of the method according to any one of claims 1 to 9.
